# EUROPÄISCHE PATENTSCHRIFT

(11) **EP 3 235 686 B1**
(45) Veröffentlichungstag und Bekanntmachung des Hinweises auf die Patenterteilung: **29.08.2018**
(21) Anmeldenummer: 17165765.3
(22) Anmeldetag: 10.04.2017
(51) Int. Cl.: B60R 1/06, B60R 1/074, B60R 1/078

(54) **AUSSENSPIEGELANORDNUNG**
TELESCOPIC MIRROR ROD
BRAS DE RÉTROVISEUR TÉLESCOPIQUE

(30) Priorität: 22.04.2016 DE 102016107498
(43) Veröffentlichungstag der Anmeldung: 25.10.2017
(73) Patentinhaber: FICOSA International GmbH, 38302 Wolfenbüttel (DE)
(72) Erfinder: Stumpe, Matthias, 38259 Salzgitter (DE); Christoph, Wolfgang, 31542 Bad Nenndorf (DE)
(74) Vertreter: Lins, Martina

(56) Entgegenhaltungen:
- WO-A1-03/022635
- DE-B3-102011 002 295
- US-A1- 2002 021 506

## Beschreibung

Die Erfindung betrifft eine Außenspiegelanordnung mit einer Verstelleinrichtung für einen Fahrzeugspiegel, der an einem Halteelement befestigbar ist, wobei das Halteelement an einem an einer Fahrzeugstruktur befestigbaren Gehäuse gelagert ist. Außenspiegel für Fahrzeuge, insbesondere Nutzfahrzeuge wie land- und forstwirtschaftliche Nutzfahrzeuge, Lastkraftwagen oder Busse sowie Personenkraftwagen sind mit Außenspiegeln versehen, um einem Fahrzeugnutzer eine rückwärtige Sicht zu ermöglichen. Außenspiegel weisen dabei zumindest ein Spiegelgehäuse und ein darin oder daran festgelegtes Spiegelglas auf und sind an einem Halteelement oder in einem Rahmen befestigt, der an der Fahrzeugstruktur oder an einem Ausleger befestigbar ist. Die Fahrzeugspiegel können innerhalb des Spiegelgehäuses verstellbar gelagert sein, so dass unterschiedliche Winkel relativ zu dem Fahrzeugnutzer einstellbar sind, um beispielsweise beim Rangieren den gewünschten Sichtbereich einstellen zu können oder um die Position der Spiegelgläser an den jeweiligen Fahrzeugnutzer anzupassen.

Es können Situationen auftreten, in denen eine reine Winkelverstellung nicht ausreichend ist, um ein optimales Sichtfeld für den Fahrzeugnutzer bereitzustellen, beispielsweise wenn eine sehr breite Ladung transportiert werden soll, wenn ein besonders breiter Anhänger oder Auflieger gezogen werden soll oder wenn zum Rangieren ein besonderer Sichtwinkel benötigt wird. Ebenso kann es notwendig sein, den Fahrzeugspielgel möglichst nahe an der übrigen Fahrzeugkarosserie zu positionieren, beispielsweise bei schmalen Durchfahrten, in Waschstraßen oder dergleichen. In solchen Situationen ist es wünschenswert und sinnvoll, die Entfernung des Fahrzeugspiegels zu der Karosserie verändern zu können.

Dazu ist im Stand der Technik ein teleskopierbares Halteelement vorgesehen, das einen Klemmmechanismus aufweist, über den die jeweilige Position des Halteelementes relativ zur Fahrzeugkarosserie fixierbar ist. Die Position des Halteelementes kann über einen Spindelantrieb motorisch verändert werden. Eine solche Lösung ist aus der DE 10 2011 002 295 B3 bekannt.

Die US 2002/0021506 A1 betrifft einen ausfahrbaren Außenrückspiegel mit einem Spiegelgehäuse, in dem ein Antrieb, beispielsweise ein Elektromotor, angeordnet ist. Über den Elektromotor wird eine Spindel, ein Zahnriemen oder ein Reibrollengetriebe angetrieben, um den Außenspiegel relativ zu der Fahrzeugstruktur zu verlagern. Das Spiegelgehäuse ist an zwei Trägerarmen mit der Fahrzeugstruktur verbunden.

Die WO 03/022635 A1 betrifft einen Außenrückspiegel mit einem Ausfahr- und Rückzugsmechanismus für einen Teleskoparm, der einen Spiegelkopf mit einer Spiegelbefestigungsanordnung verbindet. In dem Spiegelkopf ist ein Elektromotor angeordnet, der über ein Zahnradgetriebe und ein Schneckengetriebe einen Zahnriemen antreibt, über den der Spiegelkopf von der Befestigungsanordnung weg und zu ihr hin bewegt wird.

Ausgehend von diesem Stand der Technik liegt der Erfindung die Aufgabe zugrunde, eine Außenspiegelanordnung bereitzustellen, die eine stabile Lagerung des Fahrzeugspiegels bei kompakten Baumaßen ermöglicht.

Erfindungsgemäß wird diese Aufgabe durch eine Außenspiegelanordnung mit den Merkmalen des Hauptanspruches gelöst, vorteilhafte Ausgestaltungen und Weiterbildungen der Erfindung sind in den Unteransprüchen, der Beschreibung sowie den Figuren offenbart.

Die erfindungsgemäße Außenspiegelanordnung mit einer Verstelleinrichtung für einen Fahrzeugspiegel, der mit einem Spiegelgehäuse und einem Spiegelglas ausgestattet sein kann und an einem Halteelement befestigbar ist, wobei das Halteelement an einem an einer Fahrzeugstruktur festlegbaren Gehäuse gelagert ist und mit einem Antrieb gekoppelt ist, der das Halteelement aus einer Ruhestellung, in der der Fahrzeugspiegel nahe dem Gehäuse befindet ist, in eine Betriebsstellung, in der der Fahrzeugspiegel von dem Gehäuse entfernt befindlich ist und zurück verlagert, sieht vor, dass der Antrieb an dem Halteelement befestigt ist und ein Antriebselement antreibt, das mit einem ortsfesten, in dem Gehäuse gelagerten Verzahnungsträger in Eingriff steht. Durch den ortsfest in dem Gehäuse gelagerten Verzahnungsträger, der beispielsweise als Spindel, Zahnstange oder Zahnschiene ausgebildet ist, vergrößert sich die Stabilität des Systems, da keine langgestreckten Bauteile angetrieben oder bewegt werden müssen. Durch die Befestigung des Halteelementes an dem Antrieb ergibt sich eine kompakte Bauweise, durch die der Bauraum innerhalb des Gehäuses verbessert ausgenutzt werden kann. Darüber hinaus kann durch gemeinsame Verlagerung des Halteelementes mit dem Antrieb die Masseverteilung in der Ruhestellung und in der Betriebsstellung günstig beeinflusst werden, so dass ein verbessertes Schwingungsverhalten der Außenspiegelanordnung insgesamt bereitgestellt werden kann. Dadurch erhöht sich einerseits die Haltbarkeit und anderseits verbessert sich die Sicht in den Fahrzeugspiegel aufgrund verringerter Vibrationen.

Der Verzahnungskörper ist bevorzugt als Spindel oder Zahnstange bzw. Zahnschiene ausgebildet, wobei bei einer Ausgestaltung des Verzahnungsträgers als Spindel das Antriebselement als eine Spindelmutter und bei einer Ausgestaltung des Verzahnungsträgers als Zahnstange oder Zahnschiene das Antriebselement als Zahnrad ausgebildet ist. Das durch den Antrieb, das Antriebselement und den Verzahnungsträger gebildete Getriebe ist somit entweder als Schraubgetriebe mit Spindel und Spindelmutter oder als Zahngetriebe mit Zahnstange, Zahnschiene und Zahnrad ausgebildet. Die Zahnstange oder die Zahnschiene kann entweder aus Metall oder aus einem langgestreckten, auf einem Träger befestigten Zahnriemenabschnitt bestehen.

Bevorzugt erstreckt sich der Verzahnungsträger in dem Gehäuse über die gesamte Länge des Gehäuseinnenraums, so dass ein maximaler Verfahrweg aus der Ruhestellung in eine Betriebsstellung erreicht werden kann. Durch die Ausschöpfung der gesamten Länge des Gehäuseinnenraumes kann der Antrieb zusammen mit dem Halteelement und dem Antriebselement in die jeweilige Endstellung maximal verfahren werden, so dass sich ein maximaler Verstellbereich für den Fahrzeugspiegel der Außenspiegelanordnung ergibt.

Der Verzahnungsträger ist bevorzugt an einander gegenüberliegenden Wänden des Gehäuses befestigt, wodurch sich eine besonders stabile Konstruktion ergibt. Durch die beidseitige, endseitige Lagerung des Verzahnungsträgers an den Gehäusewänden und die Fixierung an oder innerhalb der Gehäusewände dergestalt, dass eine Verlagerung oder Verdrehung des Verzahnungsträgers relativ zu dem Gehäuse nicht stattfinden kann, wird die Steifigkeit und Stabilität des Gehäuses und damit der gesamten Außenspiegelanordnung vergrößert.

Das Halteelement ist vorzugsweise längsverschieblich in dem Gehäuse gelagert, beispielsweise über eine Gleitlagerung oder eine Rollenlagerung, so dass sich einerseits eine leichtgängige Verlagerbarkeit des Halteelementes in das Gehäuse bzw. aus dem Gehäuse heraus ergibt und andererseits ein Schutz in der Ruhestellung für das Halteelement bereitgestellt wird, das sich in der Ruhestellung zumindest teilweise innerhalb des vorzugsweise geschlossenen Gehäuses befindet. Über eine Dichtung kann das Innere des Gehäuses gegenüber Umwelteinflüssen geschützt werden.

Sofern das Halteelement als Rohr ausgebildet ist, kann dieses zur Durchführung von Leitungen dienen, die in den Fahrzeugspiegel, insbesondere in das Fahrzeugspiegelgehäuse führen, um dort Informationen oder Energie zu übertagen. Die Leitungen können zur Energieversorgung einer Spiegelheizung, eines elektrischen Antriebes zum Verstellen der Fahrzeugspiegel oder der Spiegelgläser oder aber zur Aufnahme und Weiterleitung von Positionsdaten eines GPS-Empfängers oder Bildsignalen aus einer in dem Fahrzeugspiegel angeordneten Kamera dienen. Die Führung der Leitungen innerhalb des Halteelementes schützt die Leitungen. Der Rohrquerschnitt ist nicht auf die Kreisform eingeschränkt.

In einer Weiterbildung der Erfindung ist es vorgesehen, dass das Getriebe aus Antriebselement, Verzahnungsträger und Antrieb grundsätzlich selbsthemmend ist, die Selbsthemmung ist jedoch nur so stark, dass eine Verfahrbewegung aus einer Ruhestellung in eine Betriebsstellung oder umgekehrt bei einem ausgeschalteten Antrieb durch eine manuelle Betätigung möglich ist, im Normalbetrieb jedoch das Halteelement in der einmal eingestellten Position hält. Bei Ausgestaltung des Antriebs mit einem Zahnradgetriebe, also bei einer Zahnstange mit einem Zahnrad als Antriebselement, kann zwischen dem Antrieb, beispielsweise einem Elektromotor, und dem Antriebselement ein Getriebe mit einer entsprechenden Selbsthemmung angeordnet sein. Alternativ ist eine Bremseinrichtung möglich, die beispielsweise bei Aktivierung des Antriebes außer Wirkung gesetzt wird und erst dann eingreift, wenn die gewünschte Position erreicht ist und der Antrieb abgeschaltet wurde.

Neben einem elektromotorischen Antrieb ist es möglich, diesen durch andere Antriebseinheiten zu ersetzen.

Der Antrieb, das Antriebselement und das Koppelelement, mit dem der Antrieb mit dem Halteelement gekoppelt ist, ist längsbeweglich an dem Verzahnungsträger geführt, bevorzugt in einer Parallelführung, das heißt, dass das Halteelement und der Verzahnungsträger in dem Gehäuse im Wesentlichen parallel zueinander orientiert sind. Dadurch ergibt sich aufgrund der Parallelführung eine besonders stabile Führung des Halteelementes bei der Verlagerung von der Ruhestellung in die Betriebsstellung und zurück.

Bei einer Ausgestaltung des Verzahnungsträgers als Spindel ist bevorzugt das Koppelelement rotationsstarr in dem Gehäuse geführt, beispielsweise über eine Nutführung oder eine Gleitfläche, gegebenenfalls auch im Rahmen einer Rollenlagerung, so dass einerseits eine Längsverschieblichkeit des Koppelelementes gegeben und andererseits eine Rotation verhindert wird.

An dem Gehäuse können Befestigungseinrichtungen zur Festlegung an der Karosserie des Fahrzeuges angeordnet sein, ebenso kann eine Schnittstelle für eine einfache Verbindung mit elektrischen Leitungen und Kontakten an dem Gehäuse vorgesehen sein. Sofern der Verzahnungsträger als Spindel ausgebildet ist, kann das Antriebselement einerseits als Spindelmutter und andererseits als Kugelumlaufspindel ausgebildet sein.

Nachfolgend wird ein Ausführungsbeispiel der Erfindung anhand der beigefügten Figuren näher erläutert. Es zeigen:
- Figur 1 -: eine Außenspiegelanordnung ohne Fahrzeugspiegel in Gesamtansicht;
- Figur 2 -: eine schematische Schnittdarstellung einer Außenspiegeleinrichtung in der Ruheposition; sowie
- Figur 3 -: eine Außenspiegelanordnung gemäß Figur 2 in Betriebsstellung.

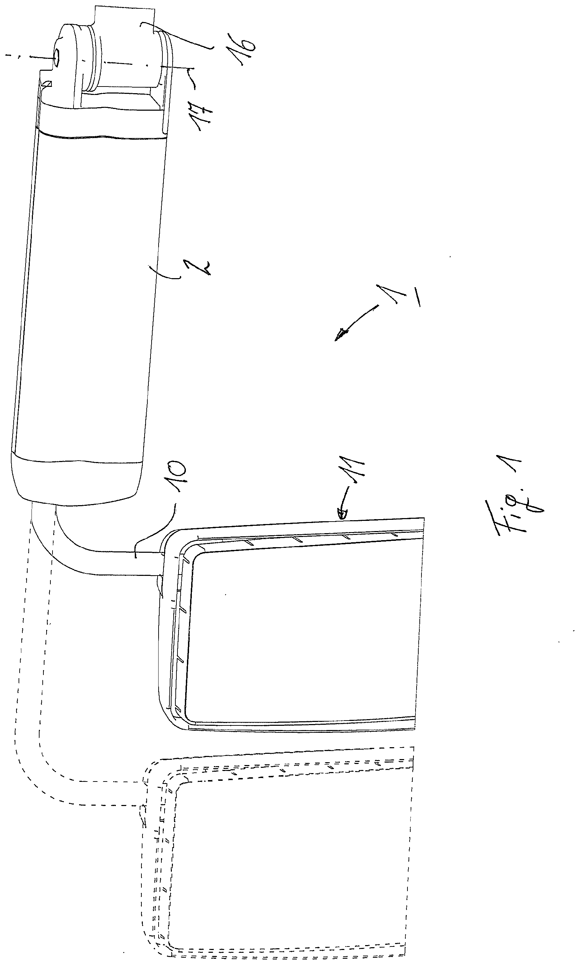

Figur 1 zeigt eine Außenspiegelanordnung 1 mit einem Fahrzeugspiegel 11, der an einem Halteelement 10 befestigt ist. Das Halteelement 10 ist an einem Gehäuse 2 gelagert, das über eine Befestigungseinrichtung 16 an einer nicht dargestellten Fahrzeugkarosserie befestigbar ist. Die Befestigungseinrichtung 16 legt einerseits das Gehäuse 2 an der Fahrzeugkarosserie fest und ermöglicht andererseits eine Verschwenkung des Gehäuses 2 relativ zu der Fahrzeugkarosserie um eine Schwenkachse 17, die an der Befestigungseinrichtung 16 ausgebildet ist. Im dargestellten Ausführungsbeispiel ist das Halteelement 10 als ein Winkel ausgebildet, dessen waagerechter erster Schenkel sich innerhalb des langgestreckten Gehäuses 2 erstreckt, wenn das Halteelement 10 in einer eingefahrenen Stellung befindet, wie es in der Figur 1 gezeigt ist. Der zweite Schenkel ist in einem im Wesentlichen rechten Winkel zu dem ersten Schenkel orientiert und zeigt senkrecht nach unten, andere Winkel oder eine unmittelbare Befestigung des Fahrzeugspiegels 11, der ein Spiegelgehäuse und ein Spiegelglas aufweist, an einem geraden Halteelement 10 sind ebenfalls vorgesehen. Über eine Verstelleinrichtung, die später erläutert werden wird, ist das Halteelement 10 aus der dargestellten Ruhestellung in die angedeutete Betriebsstellung verschiebbar. Der Fahrzeugspiegel 11 ebenso wie das Halteelement 10 sind in der Betriebsstellung mit Strichlinien angedeutet.

Über die innerhalb des Gehäuses 2 angeordnete Verstelleinrichtung ist es möglich, bei Bedarf das Halteelement 10 und damit auch den Fahrzeugspiegel 11 aus der Ruhestellung, in der der Fahrzeugspiegel 11 sehr nah an dem Gehäuse 2 befindlich ist, ist eine weiter entfernte Betriebsstellung und zurück zu verlagern. Dadurch wird der Abstand des Fahrzeugspiegels 11 von einem Fahrzeugnutzer verändert, sodass sich unterschiedliche Sichtbereiche für den Fahrzeugnutzer ergeben.

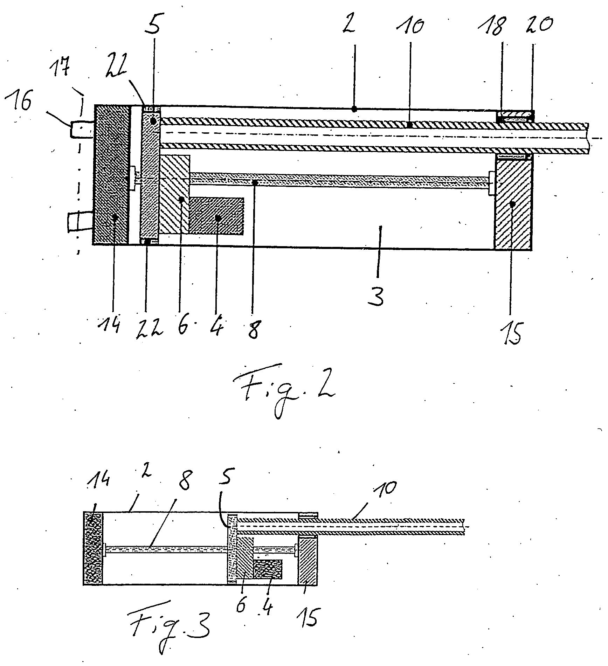

Figur 2 zeigt eine schematische Schnittdarstellung der Außenspiegelanordnung 1, jedoch ohne Fahrzeugspiegel. Das Gehäuse 2 bildet einen Innenraum 3 aus, in dem das Halteelement 10, das im dargestellten Ausführungsbeispiel als Rohr ausgebildet ist, gelagert ist. Der Innenraum 3 wird an seinen Stirnseiten durch einander gegenüberliegende Seitenwände 14, 15 begrenzt, an der linken Seitenwand 14 ist die Befestigungseinrichtung 16 mit der Schwenkachse 17 angedeutet. An der der Befestigungseinrichtung 16 gegenüberliegenden Seitenwand 15 ist das Halteelement 10 in einer Lagerung 18, im dargestellten Ausführungsbeispiel einer Geleitlagerung, gelagert. Der Innenraum 3 ist über eine Dichtung 20, die um das Halteelement 10 herumgelegt ist, gegenüber äußeren Einflüssen abgedichtet. Das Halteelement 10 kann längsverschieblich in der Lagerung 18 in Richtung aus dem Innenraum 3 heraus und zurück in dem Innenraum 3 verschoben werden. Hierzu ist in dem Innenraum 3 ein Antrieb 4 angeordnet, der über ein Antriebselement 6, beispielsweise eine Spindelmutter oder ein Zahnrad, mit einem langgestreckten Verzahnungsträger 8 gekoppelt ist. Der Verzahnungsträger 8 erstreckt sich über den gesamten Innenraum 3 des Gehäuses 2 und ist an den beiden einander gegenüberliegenden Stirnseitenwänden 14, 15 drehfest und in Längserstreckung unbeweglich fixiert. Der Verzahnungsträger 8 kann als Spindel oder Zahnstange oder ein zahnstangenähnliches Element ausgebildet sein und bildet das Verzahnungsgegenstück zu dem jeweiligen Antriebselement 6, also einer Spindelmutter, einer Schnecke oder einem Zahnrad.

Grundsätzlich ist es auch möglich, dass das Antriebselement 6 als Spindel oder Schnecke ausgebildet ist, die mit dem Verzahnungsträger 8 kämmt und bei eingeschaltetem Antrieb 4 sich je nach Drehrichtung entlang des Verzahnungsträgers 8 innerhalb des Gehäuseinnenraums 3 bewegt. Um zu verhindern, dass sich der Antrieb 4 zusammen mit dem Antriebselement 6 um den Verzahnungsträger 8 dreht, ist der Antrieb 4 längsverschieblich und rotationsstarr innerhalb des Gehäuseinnenraums 3 gelagert. Zwischen dem in Eingriff mit dem Verzahnungsträger 8 tretenden Antriebselement 6 und dem Antrieb 4 kann ein Übersetzungsgetriebe angeordnet sein.

Die Kopplung zwischen dem Antrieb 4 und dem Antriebselement 6 mit dem Haltelement 10 erfolgt über ein Koppelelement 5, das im dargestellten Ausführungsbeispiel als Gleitstein ausgebildet ist. Das Koppelelement 5 gleitet auf Gleitflächen 22 auf der Gehäusewand des Innenraumes 3 entlang, die gleichzeitig eine Rotationssperre ausbilden können, sodass das Koppelelement 5 über die Gleitflächen 22 gleichzeitig die notwendige Drehmomentabstützung gegenüber einer Drehung um den Verzahnungsträger 8 bereitstellt. Grundsätzlich kann die Verdrehsicherung auch über ein Gehäuse, in dem das Antriebselement 6 gelagert ist, realisiert werden, das mit einem Vorsprung, einer Nut oder einer Abflachung an oder in dem Verzahnungsträger 8 wechselwirkt und verhindert, dass sich der Antrieb 4 mit dem Antriebselement 6 um den Verzahnungsträger 8 dreht.

In der Figur 2 ist das Halteelement 10 vollständig eingefahren dargestellt. Das Koppelelement 5 kann mit einem Kontakt an der linken Seitenwand 14 verbunden sein, um zu gewährleisten, dass eine automatische Abschaltung des Antriebes 4 bei Erreichen des Endanschlages bewirkt wird. Wird der Antrieb 4 aktiviert, beispielsweise in Gestalt eines mit elektrischer Energie versorgten Elektromotors, wird das Antriebselement 6 in Drehung versetzt und kämmt mit dem Verzahnungsträger 8, so dass der Antrieb 4 zusammen mit dem Antriebselement 6 und dem Koppelelement 5 entlang dem Verzahnungsträger 8 nach rechts verlagert werden, so dass sich aufgrund der starren Kupplung des Koppelelementes 5 mit dem Halteelement 10 das Halteelement 10 aus dem Innenraum 3 herausbewegt.

In Figur 3 ist das Halteelement 10 in der Betriebsstellung gezeigt, der Antrieb 4 zusammen mit dem Antriebselement 6 und dem Koppelelement 5 sind in Richtung auf die rechte Seitenwand 15 mit der Lagerung 18 verfahren, das rohrförmige Halteelement 10 ist parallel zu dem langgestreckten Verzahnungsträger 8 aus dem Gehäuseinnenraum 3 verfahren worden.

Durch die Parallelführung des Halteelementes 10 mit dem Verzahnungsträger 8 ergibt sich eine besonders stabile und robuste Konstruktion. Durch die Lagerung des Halteelementes 10 an zwei relativ weit voneinander entfernten Punkten in der Ruhstellung wird die Stabilität der Baueinheit erhöht. Die starre Anbindung des Halteelementes 10 an das Koppelelement 5 vereinfacht die Montage und die Führung durch die Lagerung 18, die als Gleitlagerung oder als Rollenlagerung ausgebildet sein kann, erhöht die Robustheit des Aufbaus. Auch in der ausgefahrenen Betriebsstellung gemäß Figur 3 ergibt sich aufgrund der Abstützung des Koppelelementes 10 an den Gleitflächen 22 des Gehäuseinnenraumes 3 und an dem starren Verzahnungsträger 8 über das Antriebselement 6 beziehungsweise das Antriebselement 6 umgebene Gehäuse eine weit auseinanderliegende Krafteinleitung mit einer erhöhten Stabilität.

Über die gemeinsame Verlagerung des mit dem Halteelement 10 mitbewegten Antriebs 4 sowie mit dem Koppelelement 5 und dem Antriebselement 6 ist das Vibrationsverhalten des Fahrzeugspiegels 11 positiv beeinflussbar. Durch die rohrförmige Ausgestaltung des Halteelements 10 können Kabel in den Fahrzeugspiegel 11 hineingeführt werden.

Bei einer Ausgestaltung der Verstelleinrichtung mit einem Spindelantrieb wird ein gewisses Maß an Selbsthemmung bereitgestellt, das über die Gewindesteigung oder über andere Widerstandseinrichtungen so eingestellt wird, dass das Halteelement 10 in der einmal eingestellten Position bei ausgeschaltetem Antrieb 4 gehalten wird und sich unter normalen Betriebsbedingungen nicht verstellt. Jedoch kann eine Rückstellung durch Aufbringen einer entsprechenden Zug- oder Druckkraft in Längserstreckung des Halteelementes per Hand, beispielsweise bei Ausfall der Energieversorgung weiterhin erfolgen, es liegt somit keine totale Selbsthemmung vor. Eine solche Selbsthemmung kann auch über ein Getriebe, das zwischen dem Antrieb 4 und dem Antriebselement 6 angeordnet ist, bereitgestellt werden.

## Patentansprüche

1. Außenspiegelanordnung mit einer Verstelleinrichtung für einen Fahrzeugspiegel (11), der an einem Halteelement (10) befestigbar ist, das an einem an einer Fahrzeugstruktur befestigbaren Gehäuse (2) gelagert und mit einem Antrieb (4) gekoppelt ist, der das Halteelement (10) aus einer eingefahrenen Stellung, in der der Fahrzeugspiegel (11) nah an dem Gehäuse (2) befindlich ist, in eine ausgefahrene Betriebsstellung, in der der Fahrzeugspiegel (11) von dem Gehäuse (2) entfernt befindlich ist, und zurück verlagert, **dadurch gekennzeichnet, dass** der Antrieb (4) an dem Halteelement (10) befestigt ist und ein Antriebselement (6) antreibt, das mit einem ortsfesten, an dem Gehäuse (2) gelagerten Verzahnungsträger (8) in Eingriff steht.

2. Außenspiegelanordnung nach Anspruch 1, **dadurch gekennzeichnet, dass** der Verzahnungsträger (8) als Spindel oder Zahnstange und das Antriebselement (6) als Spindelmutter oder Zahnrad ausgebildet ist.

3. Außenspiegelanordnung nach Anspruch 1 oder 2, **dadurch gekennzeichnet, dass** der Verzahnungsträger (8) sich in dem Gehäuse (2) über die gesamte Länge des Gehäuseinnenraumes (3) erstreckt.

4. Außenspiegelanordnung nach einem der voranstehenden Ansprüche, **dadurch gekennzeichnet, dass** der Verzahnungsträger (8) an einander gegenüberliegenden Wänden (14, 15) des Gehäuses (2) befestigt ist.

5. Außenspiegelanordnung nach einem der voranstehenden Ansprüche, **dadurch gekennzeichnet, dass** das Halteelement (10) längsverschieblich in dem Gehäuse (2) gelagert ist.

6. Außenspiegelanordnung nach einem der voranstehenden Ansprüche, **dadurch gekennzeichnet, dass** das Halteelement (10) als Rohr ausgebildet ist.

7. Außenspiegelanordnung nach einem der voranstehenden Ansprüche, **dadurch gekennzeichnet, dass** das aus Antriebselement (6) und Verzahnungsträger (8) gebildete Getriebe selbsthemmend ausgebildet ist oder eine Bremseinrichtung aufweist.

8. Außenspiegelanordnung nach einem der voranstehenden Ansprüche, **dadurch gekennzeichnet, dass** der Antrieb (4) als Elektromotor ausgebildet ist.

9. Außenspiegelanordnung nach einem der voranstehenden Ansprüche, **dadurch gekennzeichnet, dass** der Antrieb (4), das Antriebselement (6) und ein Koppelelement (5), mit dem der Antrieb (4) mit dem Halteelement (10) gekoppelt ist, längsbeweglich entlang des Verzahnungsträgers (8) geführt sind.

10. Außenspiegelanordnung nach Anspruch 9, **dadurch gekennzeichnet, dass** das Koppelelement (5) rotationsstarr in dem Gehäuse (2) geführt ist.

11. Außenspiegelanordnung nach einem der voranstehenden Ansprüche, **dadurch gekennzeichnet, dass** an dem Gehäuse (2) zumindest eine Befestigungseinrichtung (16) zur Festlegung des Gehäuses (2) an einer Fahrzeugkarosserie ausgebildet ist.

12. Außenspiegelanordnung nach einem der voranstehenden Ansprüche, **dadurch gekennzeichnet, dass** das Halteelement (10) parallel zu dem Verzahnungsträger (8) in dem Gehäuse (2) geführt ist.

13. Außenspiegelanordnung nach einem der voranstehenden Ansprüche, **dadurch gekennzeichnet, dass** das Halteelement (10) in dem Gehäuse (2) über eine Gleitlagerung (18) oder Rollenlagerung gelagert ist.

14. Außenspiegelanordnung nach Anspruch 9, **dadurch gekennzeichnet, dass** das Koppelelement (5) in dem Gehäuse (2) über eine Gleitlagerung (22) oder Rollenlagerung gelagert ist.

## Claims

1. Exterior mirror assembly with an adjustment device for a vehicle mirror (11), which is attachable to a holding element (10), the holding element being mounted to a housing (2), which is attachable to a vehicle structure and coupled to a drive (4), which displaces the holding element (10) from a retracted position, in which the vehicle mirror is close to the housing (2), into an extended operational position, in which the vehicle mirror (11) is distant from the housing (2), and vice-versa, **characterized in that** the drive (4) is mounted to the holding element (10) and drives a drive element (6) which engages with a toothing carrier (8) being mounted to the housing (2).

2. Exterior mirror assembly according to claim 1, **characterized in that** the toothing carrier (8) is designed as a spindle or a toothed rack and the drive element (6) is designed as a spindle nut or a gearwheel.

3. Exterior mirror assembly according to claim 1 or 2, **characterized in that** the toothing carrier (8) extends inside of the housing (2) over the entire length of the housing interior (3).

4. Exterior mirror assembly according to one of the preceding claims, **characterized in that** the toothing carrier (8) is attached to opposing walls (14, 15) of the housing (2).

5. Exterior mirror assembly according to one of the preceding claims, **characterized in that** the holding element (10) is mounted inside the housing (2) in a longitudinally displaceable manner.

6. Exterior mirror assembly according to one of the preceding claims, **characterized in that** the holding element (10) is designed as a pipe.

7. Exterior mirror assembly according to one of the preceding claims, **characterized in that** the gear, formed by the drive element (6) and the toothing carrier (8), is self-locking or comprises a braking device.

8. Exterior mirror assembly according to one of the preceding claims, **characterized in that** the drive (4) is designed as an electric motor.

9. Exterior mirror assembly according to one of the preceding claims, **characterized in that** the drive (4), the drive element (6) and a coupling element (5), by which the drive (4) is coupled to the holding element (10), are guided in a longitudinally moveable manner.

10. Exterior mirror assembly according to claim 9, **characterized in that** the coupling element (5) is guided inside the housing (2) in a non-rotatable manner.

11. Exterior mirror assembly according to one of the preceding claims, **characterized in that** at least one attachment device (16) is formed at the housing (2) for attaching the housing (2) to a vehicle body.

12. Exterior mirror assembly according to one of the preceding claims, **characterized in that** the holding element (10) is guided in parallel with the toothing carrier (8) in the housing (2).

13. Exterior mirror assembly according to one of the preceding claims, **characterized in that** the holding element (10) is mounted inside the housing (2) via a slide bearing (18) or a roller bearing.

14. Exterior mirror assembly according to claim 9, **characterized in that** the coupling element (5) is mounted inside the housing (2) via a slide bearing (22) or a roller bearing.

## Revendications

1. Ensemble de rétroviseur extérieur comportant un dispositif de réglage pour un rétroviseur de véhicule (11) qui peut être fixé à un élément de retenue (10) monté sur un boîtier (2) susceptible d'être fixé à une structure de véhicule et couplé à un entraînement (4) qui déplace l'élément de retenue (10) depuis une position rétractée dans laquelle le rétroviseur (11) est situé près du boîtier (2), jusque dans une position de fonctionnement déployée dans laquelle le rétroviseur (11) est situé éloigné du boîtier (2), et inversement, **caractérisé en ce que** l'entraînement (4) est fixé à l'élément de retenue (10) et entraîne un élément d'entraînement (6) qui est en engagement avec un support de denture (8) stationnaire monté sur le boîtier (2).

2. Ensemble de rétroviseur extérieur selon la revendication 1, **caractérisé en ce que** le support de denture (8) est réalisé sous forme de broche ou de crémaillère, et l'élément d'entraînement (6) est réalisé sous forme d'écrou de broche ou de roue dentée.

3. Ensemble de rétroviseur extérieur selon la revendication 1 ou 2, **caractérisé en ce que** le support de denture (8) s'étend dans le boîtier (2) sur toute la longueur de l'espace intérieur (3) du boîtier.

4. Ensemble de rétroviseur extérieur selon l'une des revendications précédentes, **caractérisé en ce que** le support de denture (8) est fixé sur des parois mutuellement opposées (14, 15) du boîtier (2).

5. Ensemble de rétroviseur extérieur selon l'une des revendications précédentes, **caractérisé en ce que** l'élément de retenue (10) est monté en translation longitudinale dans le boîtier (2).

6. Ensemble de rétroviseur extérieur selon l'une des revendications précédentes, **caractérisé en ce que** l'élément de retenue (10) est réalisé sous forme de tube.

7. Ensemble de rétroviseur extérieur selon l'une des revendications précédentes, **caractérisé en ce que** le mécanisme formé par l'élément d'entraînement (6) et par le support de denture (8) est réalisé avec autoblocage ou comprend un dispositif de freinage.

8. Ensemble de rétroviseur extérieur selon l'une des revendications précédentes, **caractérisé en ce que** l'entraînement (4) est réalisé sous forme de moteur électrique.

9. Ensemble de rétroviseur extérieur selon l'une des revendications précédentes, **caractérisé en ce que** l'entraînement (4), l'élément d'entraînement (6) et un élément de couplage (5) par lequel l'entraînement (4) est couplé à l'élément de retenue (10) sont guidés de façon longitudinalement mobile le long du support de denture (8).

10. Ensemble de rétroviseur extérieur selon la revendication 9, **caractérisé en ce que** l'élément de couplage (5) est guidé solidairement en rotation dans le boîtier (2).

11. Ensemble de rétroviseur extérieur selon l'une des revendications précédentes, **caractérisé en ce qu'**au moins un dispositif de fixation (16) pour immobiliser le boîtier (2) sur une carrosserie de véhicule est réalisé sur le boîtier (2).

12. Ensemble de rétroviseur extérieur selon l'une des revendications précédentes, **caractérisé en ce que** l'élément de retenue (10) est guidé parallèlement au support de denture (8) dans le boîtier (2).

13. Ensemble de rétroviseur extérieur selon l'une des revendications précédentes, **caractérisé en ce que** l'élément de retenue (10) est monté dans le boîtier (2) par un palier lisse (18) ou par un palier à rouleaux.

14. Ensemble de rétroviseur extérieur selon la revendication 9, **caractérisé en ce que** l'élément de couplage (5) est monté dans le boîtier (2) par un palier lisse (22) ou par un palier à rouleaux.
